(19) Europäisches Patentamt
European Patent Office
Office européen des brevets

(11) EP 3 651 258 B1

(12) **EUROPEAN PATENT SPECIFICATION**

(45) Date of publication and mention
of the grant of the patent:
**27.04.2022 Bulletin 2022/17**

(21) Application number: **18861833.4**

(22) Date of filing: **04.07.2018**

(51) International Patent Classification (IPC):
**H01M 10/12** (2006.01)   **H01M 4/14** (2006.01)
**H01M 4/73** (2006.01)

(52) Cooperative Patent Classification (CPC):
**H01M 4/73; H01M 4/14; H01M 10/12;** Y02E 60/10;
Y02P 70/50

(86) International application number:
**PCT/JP2018/025349**

(87) International publication number:
**WO 2019/064792 (04.04.2019 Gazette 2019/14)**

(54) **LEAD-ACID BATTERY**

BLEI-SÄURE-BATTERIE

BATTERIE AU PLOMB ACIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2017 JP 2017188947**

(43) Date of publication of application:
**13.05.2020 Bulletin 2020/20**

(73) Proprietor: **GS Yuasa International Ltd.
Kyoto-shi, Kyoto 601-8520 (JP)**

(72) Inventors:
• **ITO, Etsuko
Kyoto-shi
Kyoto 601-8520 (JP)**
• **ANDO, Kazunari
Kyoto-shi
Kyoto 601-8520 (JP)**

(74) Representative: **Isarpatent
Patent- und Rechtsanwälte Barth
Charles Hassa Peckmann & Partner mbB
Friedrichstrasse 31
80801 München (DE)**

(56) References cited:
JP-A- H 038 258       JP-A- H0 982 303
JP-A- S5 586 066       JP-A- H06 188 025
JP-A- 2017 033 864     US-A1- 2015 099 189

EP 3 651 258 B1

**Description**

TECHNICAL FIELD

The technology disclosed in the present specification relates to a lead-acid battery.

BACKGROUND ART

Lead-acid batteries are widely used as secondary batteries. For example, the lead-acid battery is mounted on a vehicle such as an automobile, and is used as a power supply source for a starter at the time of an engine starting and a power supply source for various electric components such as lights.

The lead-acid battery includes a positive electrode plate, a negative electrode plate, and a separator disposed between the positive electrode plate and the negative electrode plate. Each positive electrode plate has a grid and an active material supported by the grid.

Conventionally, in order to prevent the active material from falling away from the grid, there has been known a technique of arranging a nonwoven glass mat containing glass fibers having a diameter of greater than 10 pm and glass microfibers having a diameter of less than 1 pm on the active material (for example, see Patent Document 1). US 2015/099189 A1 discloses a lead-acid battery comprising a positive electrode, a negative electrode, a separator positioned between the positive electrode and the negative electrode so as to electrically insulate the positive and negative electrodes, and a nonwoven fiber mat positioned adjacent the positive electrode or the negative electrode.

PRIOR ART DOCUMENT

PATENT DOCUMENT

Patent Document 1: JP-A-2011-249337

SUMMARY OF THE INVENTION

PROBLEMS TO BE SOLVED BY THE INVENTION

In the above-described conventional lead-acid battery, a glass mat composed of relatively thin glass fibers having a diameter of 16 pm or less is merely disposed on a positive electrode material (active material). For this reason, it has been unsatisfactory for preventing the positive electrode material from falling off from a current collector (grid). On the other hand, in order to more reliably prevent the positive electrode material from falling off from the current collector, it is conceivable to increase the diameter of the glass fibers contained in the glass mat. However, as the diameter of the glass fibers contained in the glass mat becomes larger, a gap between the glass fibers in the glass mat becomes narrower, which hinders movement of ions between the positive electrode plate and the electrolyte solution, thereby lowering a charge/discharge performance of the lead-acid battery.

The present specification discloses a technology capable of preventing a positive electrode material from falling off from a current collector and improving life characteristics while suppressing hindering of movement of ions by a glass mat and deterioration of capacity characteristics.

MEANS FOR SOLVING THE PROBLEMS

A lead-acid battery disclosed in the present specification is a lead-acid battery, and includes a positive electrode plate including a current collector and a positive electrode material supported by the current collector, a negative electrode plate, a separator disposed between the positive electrode plate and the negative electrode plate, and a glass mat containing a glass fiber and disposed on the positive electrode material in the positive electrode plate. In this lead-acid battery, the glass fiber contained in the glass mat includes a first glass fiber having a diameter of 8 pm or more and 20 pm or less and a second glass fiber having a diameter of 50 pm or more and 100 pm or less. A specific region where the positive electrode material, the first glass fiber, and the second glass fiber are mixed is present in at least one cross section substantially orthogonal to the positive electrode plate in the positive electrode material and the glass mat.

BRIEF DESCRIPTION OF THE DRAWINGS

Fig. 1 is a perspective view showing an appearance configuration of a lead-acid battery 100 in the present embodiment.
Fig. 2 is an explanatory view showing a Y-Z cross-sectional configuration of the lead-acid battery 100 taken along line II-II of Fig. 1.
Fig. 3 is an explanatory view showing a Y-Z cross-sectional configuration of the lead-acid battery 100 taken along line III-III of Fig. 1.
Fig. 4 is an explanatory view schematically showing an X-Z cross-sectional configuration substantially orthogonal to a positive electrode plate 210 in a positive electrode current collector 212 and a glass mat 300.
Fig. 5 is a BSE image of a cut surface of the positive electrode plate 210.
Fig. 6 is an explanatory view showing performance evaluation results.

MODE FOR CARRYING OUT THE INVENTION

The technology disclosed in present specification may be implemented by the following aspects.

(1) A lead-acid battery disclosed in the present specification is a lead-acid battery, and includes a positive electrode plate including a current collector and a positive electrode material supported by the current collector, a negative electrode plate, and a glass mat including a separator, disposed between the positive electrode plate and the negative electrode plate, and includes glass fibers. In this lead-acid battery, the glass fiber contained in the glass mat includes a first glass fiber having a diameter of 8 pm or more and 20 $\mu$m or less and a second glass fiber having a diameter of 50 pm or more and 100 pm or less. A specific region where the positive electrode material, the first glass fiber, and the second glass fiber are mixed is present in at least one cross section substantially orthogonal to the positive electrode plate in the positive electrode material and the glass mat. The positive electrode plate includes a current collector and a positive electrode material (active material, additive, and others). That is, the positive electrode material is obtained by removing the current collector from the positive electrode plate, and is generally called an "active material".

In the above-described conventional lead-acid battery in which all the glass fibers contained in the glass mat have a diameter of 16 $\mu$m or less, strength of the glass fibers is relatively low because the glass fibers are relatively thin. For this reason, in the conventional lead-acid battery, even if a part of the glass fiber is located inside the positive electrode material, when a volume of the positive electrode material changes due to charge and discharge of the lead-acid battery, for example, the glass fiber may be damaged or is likely to be removed from the positive electrode material. Therefore, a bonding strength between the glass mat and the positive electrode material is not sufficiently ensured, and falling off of the positive electrode material cannot be sufficiently suppressed. In general, like the above-described conventional lead-acid battery, a glass mat formed of relatively thin glass fibers has a narrow gap between the glass fibers as compared with a glass mat formed of relatively thick glass fibers. Therefore, movement of ions between the positive electrode plate and the electrolyte solution is hindered, and the charge-discharge performance of the lead-acid battery is reduced. On the other hand, for example, in a lead-acid battery in which all glass fibers contained in the glass mat are relatively thick (e.g., having a diameter of 50 pm or more), the gap between the glass fibers is wider than in the above-described conventional lead-acid battery. Therefore, hindering of the movement of ions between the positive electrode plate and the electrolyte solution due to the glass mat is suppressed. However, in the lead-acid battery, even if a part of the glass fiber is located inside the positive electrode material, the positive electrode material located between the glass fibers is likely to fall off due to a wide gap between the glass fibers.

On the other hand, according to the lead-acid battery of the present embodiment, the glass fibers contained in the glass mat include first glass fibers having a diameter of 8 pm or more and 20 pm or less and second glass fibers having a diameter of 50 pm or more and 100 pm or less. Thus, in the lead-acid battery of the present embodiment, the glass mat has both the first glass fiber having a diameter of 8 pm or more and 20 pm or less and the second glass fiber having a diameter of 50 pm or more and 100 pm or less, and the gap between the glass fibers is wider than in the above-described conventional lead-acid battery in which the glass mat contains only relatively thin glass fibers. Therefore, the glass mat suppresses hindering of the movement of ions between the positive electrode plate and the electrolyte solution. In addition, in the lead-acid battery of the present embodiment, the specific region where the positive electrode material, the first glass fiber, and the second glass fiber are mixed is present in at least one cross section substantially orthogonal to the positive electrode plate in the positive electrode material and the glass mat. Since the first glass fiber and the second glass fiber are mixed in the positive electrode material, adhesion between the glass mat and the positive electrode material is high, and a high anchoring effect is exhibited.

In the lead-acid battery of the present embodiment, since the second glass fiber is mixed in the positive electrode material, the glass mat and the positive electrode material are bonded with higher strength as compared with the above-described conventional lead-acid battery since the first glass fiber is mixed in the positive electrode material, the positive electrode material located between the relatively thick second glass fibers is prevented from falling off. As described above, according to the lead-acid battery of the present embodiment, it is possible to prevent the positive electrode material from falling off from the current collector and improve life characteristics while suppressing hindering of movement of ions by the glass mat and deterioration of capacity characteristics.

(2) In the above lead-acid battery, a basis weight of the glass mat may be 20 g/m2 or more and 35 g/m2 or less. According to the lead-acid battery, since the basis weight of the glass mat is 20 g/m2 or more, compared to a configuration in which the basis weight of the glass mat is less than 20 g/m2, it is possible to more effectively prevent the positive electrode material from falling off from the current collector. In addition, according to the present lead-acid battery, since the basis weight of the glass mat is 35 g/m2 or less, an area of the glass fiber covering the positive electrode material is small as compared with a configuration in which the basis weight of the glass mat is more than 35 g/m2, so that it is possible to more effectively suppress hindering of the movement of ions by the glass mat, and to suppress deterioration of discharge characteristics.

(3) In the above lead-acid battery, a total pore volume per unit mass of the positive electrode material may be 0.167 cm$^3$/g or less. In general, when a total pore volume per unit mass of the positive electrode material increases, a reaction area of the positive electrode material increases due to an increase in porosity of the positive electrode material. Therefore, the capacity characteristics of the lead-acid battery are improved. However, on the other hand, since the positive electrode material has a lower density, the positive electrode material is likely to fall off from the current collector (retention of the positive electrode material is reduced), so that the life characteristics of the lead-acid battery due to repeated charging and discharging are deteriorated. Conversely, when the total pore volume per unit mass of the positive electrode material decreases, the reaction area of the positive electrode material decreases due to a decrease in the porosity of the positive electrode material. Therefore, the capacity characteristics of the lead-acid battery are deteriorated. However, on the other hand, since the positive electrode material has a higher density, it is difficult for the positive electrode material to fall off (the retention of the positive electrode material is improved), so that the life characteristics of the lead-acid battery due to repeated charging and discharging are improved. As described above, the capacity characteristics and the life characteristics have a mutually contradictory relationship.

On the other hand, as described above, in the present lead-acid battery, the glass mat including the first glass fiber and the second glass fiber having different diameters from each other can sufficiently prevent the positive electrode material from falling off. For this reason, according to the present lead-acid battery, in order to improve the capacity characteristics, when the porosity of the positive electrode material is increased by, for example, setting the total pore volume per unit mass of the positive electrode material to 0.078 cm$^3$/g or more, along with this, even if the positive electrode material is likely to fall off due to the decrease in the density of the positive electrode material, the falling off of the positive electrode material is sufficiently suppressed by a holding force of the glass mat, so that a deterioration of the life characteristics can be avoided.

On the other hand, when the total pore volume per unit mass of the positive electrode material is excessively large, even if the above-described glass mat is disposed, the positive electrode material cannot be prevented from falling off, and the life characteristics may be deteriorated. On the other hand, according to the present lead-acid battery, since the total pore volume per unit mass of the positive electrode material is 0.167 cm$^3$/g or less, it is possible to sufficiently prevent the positive electrode material from falling off and improve the life characteristics while enhancing the capacity characteristics of the lead-acid battery.

(4) In the above lead-acid battery, both edge portions of the glass mat may be located inside both edge portions of the current collector in at least one direction orthogonal to a direction of opposing the positive electrode plate to the negative electrode plate. According to the present lead-acid battery, both edge portions of the glass mat are located inside both edge portions of the current collector in at least one direction orthogonal to the direction of opposing the positive electrode plate to the negative electrode plate. Consequently, compared to a configuration in which both edge portions of the glass mat coincide with both edge portions of the current collector, it is possible to prevent the glass mat from being disposed uselessly even to a frame portion of the current collector of the positive electrode plate, which does not contribute to the reaction because the positive electrode material is not applied.

(5) In the above lead-acid battery, in the positive electrode plate on which the glass mat is disposed, a tensile strength per unit weight of the current collector may be 4.12 N/g(0.42 kgf/g) or more. According to the present lead-acid battery, since the tensile strength per unit lattice weight of the positive electrode plate to which the glass mat is bonded is 4.12 N/g(0.42 kgf/g) or more, since a bonding strength (integration) between the glass mat and the positive electrode material is high compared to a configuration in which the tensile strength is less than 4.12 N/g (0.42 kgf/g), it is possible to prevent the positive electrode material from falling off from the current collector.

A. Embodiment:

A-1. Configuration:

(Configuration of lead-acid battery 100)

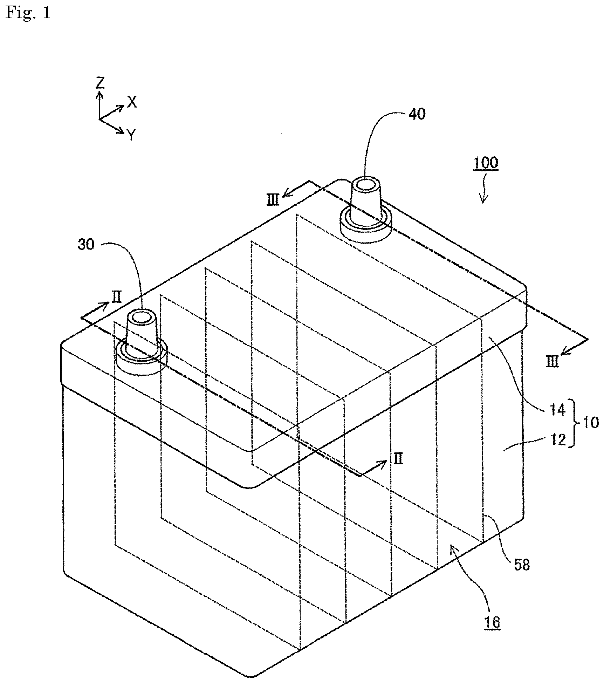

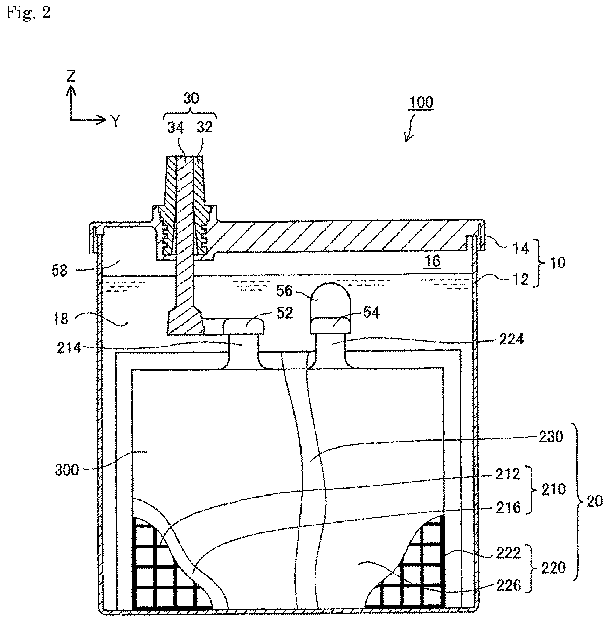

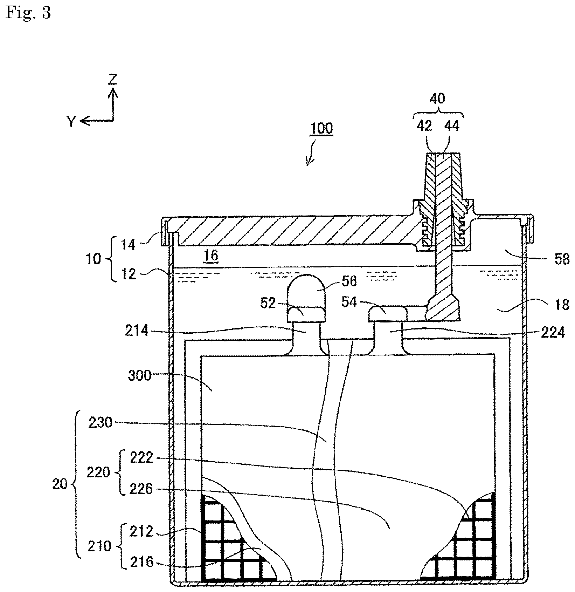

Fig. 1 is a perspective view showing an appearance configuration of a lead-acid battery 100 in the present embodiment. Fig. 2 is an explanatory view showing a Y-Z cross-sectional configuration of the lead-acid battery 100 taken along line II-II of Fig. 1. Fig. 3 is an explanatory view showing a Y-Z cross-sectional configuration of the lead-acid battery 100 taken along line III-III of Fig. 1. In Fig. 2 and Fig. 3, for convenience, as a configuration of an electrode plate group 20 described later is clearly shown, this configuration is represented in a form different from the actual configuration. Figs. 1 to 3 show mutually orthogonal X-axis, Y-axis, and Z-axis for specifying orientation. In the present specification, for the sake of convenience, the positive Z-axis direction is referred to as the "upward direction", and the negative Z-axis direction is referred to as the downward direction; however, in actuality, the lead-acid battery 100 may be disposed in a different orientation.

Since the lead-acid battery 100 can discharge a large current in a short time and, in addition, can exhibit stable performance under various environments, for example, the lead-acid battery 100 is mounted on a vehicle such as an automobile, and is used as a power supply source for a starter at the time of an engine starting and a power supply source for various electric components such as lights. As shown in Fig. 1 to Fig. 3, a lead-acid battery 100 includes a housing 10, a positive electrode-side terminal portion 30, a negative electrode-side terminal portion 40, and a plurality of the electrode plate groups 20. Hereinafter, the positive electrode-side terminal portion 30 and the negative electrode-side terminal portion 40 are also collectively referred to as "terminal portions 30 and 40".

(Configuration of housing 10)

The housing 10 has a container 12 and a lid 14. The container 12 is a substantially rectangular parallelepiped case having an opening on the upper surface and is formed of, for example, a synthetic resin. The lid 14 is a member disposed so as to close the opening of the container 12 and is formed of, for example, a synthetic resin. By bonding a peripheral edge portion of a lower surface of the lid 14 and a peripheral edge portion of the opening of the container 12 by, for example, heat welding, a space in which airtightness from the outside is maintained is formed in the housing 10. The space in the housing 10 is partitioned by a partition 58 into a plurality of (for example, six) cell chambers 16 arranged in a predetermined direction (the X-axis direction in the present embodiment). Hereinafter, the direction (the X-axis direction) in which the plurality of cell chambers 16 are arranged is referred to as "cell arrangement direction".

The single electrode plate group 20 is accommodated in each of the cell chambers 16 in the housing 10. Thus, for example, when the space in the housing 10 is partitioned into the six cell chambers 16, the lead-acid battery 100 includes the six electrode plate groups 20. Each of the cell chambers 16 in the housing 10 accommodates an electrolyte solution 18 containing dilute sulfuric acid, and the entire electrode plate group 20 is immersed in the electrolyte solution 18. The electrolyte solution 18 is injected into the cell chamber 16 from an electrolyte solution filling inlet (not shown) provided in the lid 14. The electrolyte solution 18 may contain aluminum ions in addition to diluted sulfuric acid.

(Configuration of electrode plate group 20)

The electrode plate group 20 includes a plurality of positive electrode plates 210, a plurality of negative electrode plates 220, a separator 230, and a glass mat 300. The plurality of positive electrode plates 210 and the plurality of negative electrode plates 220 are arranged such that the positive electrode plate 210 and the negative electrode plate 220 are alternately arranged. Hereinafter, the positive electrode plate 210 and the negative electrode plate 220 are also collectively referred to as "electrode plates 210 and 220".

The positive electrode plate 210 includes a positive electrode current collector 212 and a positive active material 216 supported by the positive electrode current collector 212. The positive electrode current collector 212 is a conductive member having bones arranged in a substantially lattice or mesh shape, and is formed of, for example, lead or a lead alloy. Furthermore, the positive electrode current collector 212 has near the upper end thereof a positive electrode lug portion 214 protruding upward. The positive active material 216 contains lead dioxide and glass fibers described later. The positive active material 216 may further include other known additives. The positive electrode plate 210 having such a configuration can be produced by, for example, applying or filling a paste for the positive active material containing lead dioxide on or in the positive electrode current collector 212, aging and drying the paste for the positive active material, and then performing a known chemical conversion treatment. The positive active material 216 in the present embodiment is obtained by removing the positive electrode current collector 212 from the positive electrode plate 210, and corresponds to a positive electrode material in the claims.

The negative electrode plate 220 includes a negative electrode current collector 222 and a negative active material 226 supported by the negative electrode current collector 222. The negative electrode current collector 222 is a conductive member having bones arranged in a substantially lattice or mesh shape, and is formed of, for example, lead or a lead alloy. Furthermore, the negative electrode current collector 222 has near the upper end thereof a negative electrode lug portion 224 protruding upward. The negative active material 226 contains lead (spongy lead). The negative active material 226 may further contain other known additives (for example, carbon, lignin, barium sulfate, and the like). The negative electrode plate 220 having such a configuration can be produced by, for example, applying or filling a paste for the negative active material containing lead on or in the negative electrode current collector 222, drying the paste for the negative active material, and then performing a known chemical conversion treatment.

The separator 230 is formed of an insulating material (for example, glass or synthetic resin). The separator 230 is disposed so as to be interposed between the positive electrode plate 210 and the negative electrode plate 220 adjacent to each other. The separator 230 may be configured as an integral member, or may be configured as a set of a plurality of members provided for each combination of the positive electrode plate 210 and the negative electrode plate 220.

The positive electrode lug portions 214 of the plurality of positive electrode plates 210 constituting the electrode plate group 20 are connected to a positive electrode-side strap 52 formed of, for example, lead or a lead alloy. That is, the plurality of positive electrode plates 210 are electrically connected in parallel via the positive electrode-side strap 52. Similarly, the negative electrode lug portions 224 of the plurality of negative electrode plates 220 constituting the electrode plate group 20 are connected to a negative electrode-side strap 54 formed of, for example, lead or a lead alloy. That is, the plurality of negative electrode plates 220 are electrically connected in parallel via the negative electrode-side strap 54. Hereinafter, the positive electrode-side strap 52 and the negative electrode-side strap 54 are also collectively referred to as "straps 52 and 54".

In the lead-acid battery 100, the negative electrode-side strap 54 accommodated in one cell chamber 16 is connected to the positive electrode-side strap 52 accommodated in the other cell chamber 16 adjacent to one side (for example, the positive X-axis direction side) of the one cell chamber 16 via a connecting member 56 formed of, for example, lead or a lead alloy. The positive electrode-side strap 52 accommodated in the one cell chamber 16 is connected to the negative electrode-side strap 54 accommodated in the other cell chamber 16 adjacent to the other side (for example, the negative X-axis direction side) of the one cell chamber 16 via the connecting member 56. That is, the plurality of electrode plate groups 20 included in the lead-acid battery 100 are electrically connected in series via the straps 52 and 54 and the connecting member 56. As shown in Fig. 2, the positive electrode-side strap 52 accommodated in the cell chamber 16 located at an end on one side (negative X-axis direction side) in the cell arrangement direction is connected to not the connecting member 56, but a positive electrode pole 34 described later. As shown in Fig. 3, the negative electrode-side strap 54 accommodated in the cell chamber 16 located at an end on the other side (positive X-axis direction side) in the cell arrangement direction is connected to not the connecting member 56, but a negative electrode pole 44 described later.

The glass mat 300 is, for example, a mat-shaped nonwoven fabric including glass fibers mainly composed of silica ($SiO_2$). The glass mat 300 is separate from the separator 230, and is disposed so as to cover the positive active material 216 supported by the positive electrode current collector 212 in order to prevent the positive electrode current collector 212 from falling off from the positive active material 216. In the present embodiment, the glass mats 300 are arranged on both surfaces of the positive electrode plate 210. A detailed configuration of the glass mat 300 will be described later.

(Configuration of terminal portions 30 and 40)

The positive electrode-side terminal portion 30 is disposed near the end on one side (negative X-axis direction side) in the cell arrangement direction in the housing 10, and the negative electrode-side terminal portion 40 is disposed near the end on the other side (positive X-axis direction side) in the cell arrangement direction in the housing 10.

As shown in Fig. 2, the positive electrode-side terminal portion 30 includes a positive electrode-side bushing 32 and the positive electrode pole 34. The positive electrode-side bushing 32 is a substantially cylindrical conductive member having a hole penetrating vertically, and is formed of, for example, a lead alloy. A lower portion of the positive electrode-side bushing 32 is embedded in the lid 14 by insert molding, and an upper portion of the positive electrode-side bushing 32 protrudes upward from an upper surface of the lid 14. The positive electrode pole 34 is a substantially cylindrical conductive member, and is formed of, for example, a lead alloy. The positive electrode pole 34 is inserted into a hole of the positive electrode-side bushing 32. An upper end of the positive electrode pole 34 is located at substantially the same position as an upper end of the positive electrode-side bushing 32, and is bonded to the positive electrode-side bushing 32 by, for example, welding. A lower end of the positive electrode pole 34 protrudes downward from a lower end of the positive electrode-side bushing 32, and further protrudes downward from the lower surface of the lid 14 and, as described above, is connected to the positive electrode-side strap 52 accommodated in the cell chamber 16 located at the end on one side (negative X-axis direction side) in the cell alignment direction.

As shown in Fig. 3, the negative electrode-side terminal portion 40 includes a negative electrode-side bushing 42 and the negative electrode pole 44. The negative electrode-side bushing 42 is a substantially cylindrical conductive member having a hole penetrating vertically, and is formed of, for example, a lead alloy. A lower portion of the negative electrode-side bushing 42 is embedded in the lid 14 by insert molding, and an upper portion of the negative electrode-side bushing 42 protrudes upward from an upper surface of the lid 14. The negative electrode pole 44 is a substantially cylindrical conductive member, and is formed of, for example, a lead alloy. The negative electrode pole 44 is inserted into a hole of the negative electrode-side bushing 42. An upper end of the negative electrode pole 44 is located at substantially the same position as an upper end of the negative electrode-side bushing 42, and is bonded to the negative electrode-side bushing 42 by, for example, welding. A lower end of the negative electrode pole 44 protrudes downward from a lower end of the negative electrode-side bushing 42, and further protrudes downward from the lower surface of the lid 14 and, as described above, is connected to the negative electrode-side strap 54 accommodated in the cell chamber 16 located at the end on the other side (positive X-axis direction side) in the cell alignment direction.

When the lead-acid battery 100 is discharged, a load (not shown) is connected to the positive electrode-side bushing 32 of the positive electrode-side terminal portion 30 and the negative electrode-side bushing 42 of the negative electrode-side terminal portion 40. An electric power generated by the reaction (reaction in which lead sulfate is generated from lead dioxide) at the positive electrode plate 210 of each of the electrode plate groups 20 and the reaction (reaction in which lead sulfate is generated from lead (spongy lead)) at the negative electrode plate 220 is supplied to the load. When the lead-acid battery 100 is charged, a power source (not shown) is connected to the positive electrode-side bushing 32 of the positive electrode-side terminal portion 30 and the negative electrode-side bushing 42 of the negative electrode-side terminal portion 40. The reaction (reaction in which lead dioxide is generated from lead sulfate) at the positive electrode plate 210 of each of the electrode plate groups 20 and the reaction (reaction in which lead (spongy lead) is generated from lead sulfate) at the negative electrode plate 220 occur, and the lead-acid battery 100 is charged.

A-2. Configuration of glass mat 300:

As shown in Figs. 2 and 3, in the lead-acid battery 100 of the present embodiment, the glass fibers contained in the glass mat 300 include first glass fibers 217 and second glass fibers 227. The first glass fiber 217 is a glass fiber having a diameter of 8 pm or more and 20 pm or less, and the second glass fiber 227 is a glass fiber having a diameter of 50 pm or more and 100 pm or less. Hereinafter, a condition of the diameter of the glass fiber is referred to as "specific condition regarding the fiber diameter". For example, for a plurality of glass fibers contained in the glass mat 300, the diameter is measured. From the measurement results, for example, a distribution diagram in which the diameter is a horizontal axis and the number of glass fibers showing each value of the diameter is a vertical axis is created. If a value of one of two singular points in the distribution diagram is 8 pm or more and 20 pm or less, and a value of the other of the singular points is 50 pm or more and 100 pm or less, the specific condition regarding the fiber diameter is satisfied. The glass mat 300 contains an additive in addition to the glass fiber. In the present embodiment, an organic binder is contained in addition to the first glass fiber 217 and the second glass fiber 227. Examples of materials of the organic binder include polymethyl methacrylate, polymethyl acrylate, polyethylene acrylate, and a copolymer or mixture of these three types. A range of a content ratio of the first glass fiber 217 and the second glass fiber 227 is preferably, for example, the first glass fiber 217: the second glass fiber 227 = 50 to 85: 50 to 15, more preferably the first glass fiber: the second glass fiber = 65 to 75: 35 to 25.

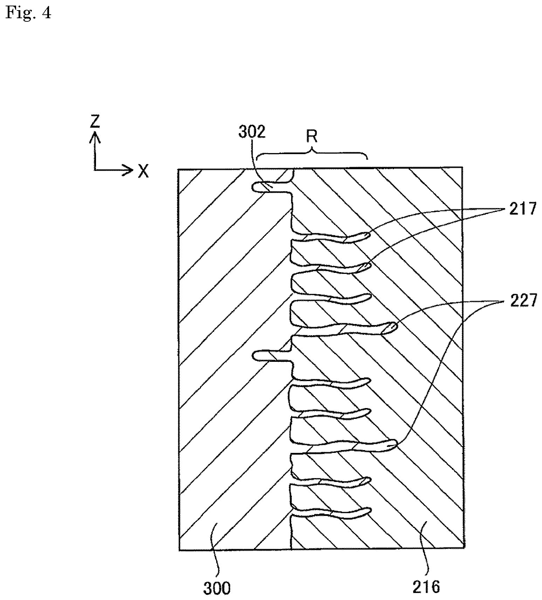

Fig. 4 is an explanatory view schematically showing an X-Z cross-sectional configuration substantially orthogonal to the positive electrode plate 210 in the positive active material 216 and the glass mat 300. The glass mat 300 is disposed so as to be in close contact with the positive active material 216. Specifically, as shown in Fig. 4, in the X-Z cross section of the positive active material 216 and the glass mat 300, there is a specific region R where the positive electrode current collector 212, the first glass fiber 217, and the second glass fiber 227 are mixed. More specifically, in the specific region R, a part of the first glass fiber 217 protruding from the glass mat 300 is located inside the positive active material 216, and a part of the second glass fiber 227 protruding from the glass mat 300 is located inside the positive active material 216. This means that the first glass fiber 217 and the second glass fiber 227 bite into the positive active material 216. It can also be said that the positive active material 216 enters a gap between the glass fibers (the first glass fiber 217 and the second glass fiber 227) in the glass mat 300 to form a columnar protrusion 302.

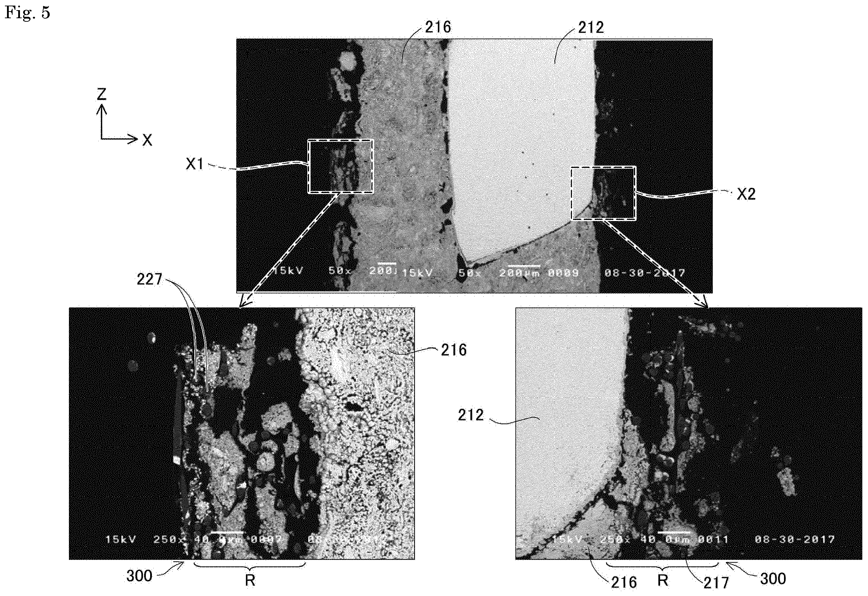

Fig. 5 is a BSE (Back-Scattered Electron) image of a cut surface of the positive electrode plate 210. A cut surface obtained by cutting the positive electrode plate 210 was polished, and an image of the polished surface was taken with a scanning electron microscope (SEM) ($50\times$, $250\times$) to obtain a BSE image. In Fig. 5, a substantially white portion is the positive electrode current collector 212, a light gray portion is the positive active material 216, a dark gray portion is glass fiber (the glass mat 300), and a black portion is a cavity. As shown in Fig. 5, it can be seen that a cut surface between the glass mat 300 disposed on each side of the positive electrode plate 210 and the positive active material 216 includes the specific region R where the positive active material 216, the first glass fiber 217, and the second glass fiber 227 are mixed.

The thickness in the X-axis direction of the specific region R may be larger by 1/3 or more than the thickness in the X-axis direction of the glass mat 300, may be larger by 1/2 or more, or may be larger by 3/4 or more. In the BSE image shown in Fig. 5, the thickness in the X-axis direction of the glass mat 300 is approximately 160 $\mu$m, and the thickness in the X-axis direction of the specific region R is 120 pm or more and 140 pm or less. The thickness in the X-axis direction of the specific region R means a depth of biting of the glass fiber contained in the glass mat 300 into the positive active material 216. The thickness in the X-axis direction of the specific region R is preferably 50 pm or more. Examples of a method of configuring such that the specific region R is present in the cross section of the positive active material 216 and the glass mat 300 include a method of applying or filling the paste for the positive active material to or in the positive electrode current collector 212 in a production stage of the lead-acid battery 100, then, before drying the paste for the positive active material, disposing the glass mat 300 on the paste for the positive active material and attaching the glass mat 300 by pressing, and then aging and drying the paste for the positive active material.

In the lead-acid battery 100 of the present embodiment, a basis weight of the glass mat 300 may be 20 g/m$^2$ or more and 35 g/m$^2$ or less. When the basis weight of the glass mat 300 is 20 g/m$^2$ or more, compared to a configuration in which the basis weight of the glass mat 300 is less than 20 g/m$^2$, it is possible to more effectively prevent the positive electrode material 216 from falling off from the current collector 212. When the basis weight of the glass mat 300 is 35 g/m$^2$ or less, as compared with a configuration in which the basis weight of the glass mat 300 is more than 35 g/m$^2$, it is possible to more effectively suppress hindering of the movement of ions (for example, movement of hydrogen ions in the electrolyte solution to the positive electrode plate during discharge and movement of hydroxide ions in the electrolyte solution to the positive electrode plate during charge) by the glass mat 300. Hereinafter, the condition that "the basis weight of the glass mat 300 is 20 g/m² or more and 35 g/m² or less" is referred to as a "specific condition regarding the basis weight".

In the lead-acid battery 100 of the present embodiment, a total pore volume per unit mass of the positive electrode material 216 may be 0.167 cm³/g or less. As described above, in general, the capacity characteristics and the life characteristics of the lead-acid battery have a mutually contradictory relationship. On the other hand, in the lead-acid battery 100 of the present embodiment, the glass mat 300 that satisfies the above-described specific condition regarding the fiber diameter can sufficiently prevent the positive active material 216 from falling off. For this reason, according to the lead-acid battery 100 of the present embodiment, in order to improve the capacity characteristics, when the porosity of the positive active material 216 is increased by, for example, setting the total pore volume per unit mass of the positive active material 216 to 0.167 cm³/g, along with this, even if the positive active material 216 is likely to fall off from the positive electrode current collector 212 due to the decrease in the density of the positive active material 216, the falling off of the positive active material 216 is sufficiently suppressed by a holding force of the glass mat 300, so that a deterioration of the life characteristics can be avoided.

On the other hand, when the total pore volume per unit mass of the positive active material is 216 excessively large, even if the above-described glass mat 300 is disposed, the positive active material 216 cannot be prevented from falling off, and the life characteristics may be deteriorated. On the other hand, according to the lead-acid battery 100 of the present embodiment, since the total pore volume per unit mass of the positive active material 216 is 0.167 cm³/g or less, it is possible to sufficiently prevent the positive active material 216 from falling off and improve the life characteristics while enhancing the capacity characteristics of the lead-acid battery 100. The total pore volume per unit mass of the positive active material 216 can be adjusted by changing a formulation (a mixing ratio of lead powder, water, and dilute sulfuric acid) when preparing the positive active material 216. For example, when the mixing ratio of dilute sulfuric acid is increased, the total pore volume per unit mass of the positive active material 216 increases. Hereinafter, the condition that "the total pore volume per unit mass of the positive active material 216 is 0.167 cm³/g or less" is referred to as a "specific condition regarding the total pore volume". The total pore volume per unit mass of the positive active material 216 is preferably 0.05 cm³/g or more. This is because, if the total pore volume per unit mass of the positive active material 216 is excessively small, the capacity characteristics of the lead-acid battery 100 are deteriorated too much.

The diameter (fiber diameter) of the glass fibers contained in the glass mat 300 is specified as follows.

(1) A lead-acid battery is disassembled, and a positive electrode plate with a glass mat is collected.
(2) The collected positive electrode plate is washed with water to remove sulfuric acid.
(3) The glass fiber diameter of a surface (or glass mat) of the positive electrode plate is measured using a microscope (Digital microscope VHX5000 series manufactured by KEYENCE CORPORATION).

The basis weight of the glass mat 300 is specified as follows.

(1) A lead-acid battery is disassembled, and a positive electrode plate with a glass mat is collected.
(2) The collected positive electrode plate is immersed in an aqueous solution (an aqueous solution containing mannitol and hydrazine sulfate) prepared in advance.
(3) After several hours, the glass mat peels off from an electrode plate surface. The peeled glass mat is collected.
(4) The collected glass mat is washed with water and sufficiently dried.
(5) The basis weight (= weight of glass mat/area of glass mat) is calculated using the area and weight of the dried glass mat.

The total pore volume per unit mass of the positive active material 216 constituting the positive electrode plate 210 of the lead-acid battery 100 is specified as follows.

(1) The lead-acid battery 100 is disassembled, and the positive electrode plate 210 is collected.
(2) The collected positive electrode plate 210 is washed with water to remove sulfuric acid.
(3) About 1 g of a sample (the positive active material 216) is collected from the positive electrode plate 210.
(4) The total pore volume of the collected positive active material 216 is measured by a mercury porosimetry using a mercury porosimeter (Autopore IV9500 series manufactured by Shimadzu Corporation).
(5) An average value of the measured values of the total pore volumes of the positive active materials 216 is defined as the total pore volume per unit mass of the positive active material 216.

The glass mat 300 is substantially rectangular when viewed in the X-axis direction, and both edge portions of the glass mat 300 are located inside both edge portions of the positive electrode current collector 212 in both the Z-axis direction (vertical direction) and the Y-axis direction. Specifically, in the Z-axis direction, the edge portion of the upper side (positive Z-axis direction side) of the glass mat 300 is located closer to the central side (lower side) of the positive electrode current collector 212 than the upper side (positive Z-axis direction side) of the positive electrode current collector 212, and the edge portion of the lower side (negative Z-axis direction side) of the glass mat 300 is located closer to the central side (upper side) of the positive electrode current collector 212 than the lower side (negative Z-axis direction side) of the positive electrode current collector 212. In the Y-axis direction, the edge portion of one side (positive Y-axis direction side) of the glass mat 300 is located closer to the central side (negative Y-axis direction side) of the positive electrode current collector 212 than one side (positive Y-axis direction side) of the positive electrode current collector 212, and the edge portion of the other side (negative Y-axis direction side) of the glass mat 300 is located closer to the central side (positive Y-axis direction side) of the positive electrode current collector 212 than the other side (negative Y-axis direction side) of the positive electrode current collector 212. As described above, in the lead-acid battery 100 of the present embodiment, when viewed in the direction (X-axis direction) orthogonal to the positive electrode plate 210, a peripheral edge portion of the glass mat 300 is located inside a peripheral edge portion of the positive electrode current collector 212 over the entire circumference. Consequently, for example, compared to a configuration in which both edge portions of the glass mat 300 coincide with both edge portions of the positive electrode current collector 212, it is possible to prevent the glass mat 300 from being disposed uselessly even to a frame portion of the current collector of the positive electrode plate 210, which does not contribute to an electric reaction because the positive active material 216 is not applied.

A-3. Performance evaluation:

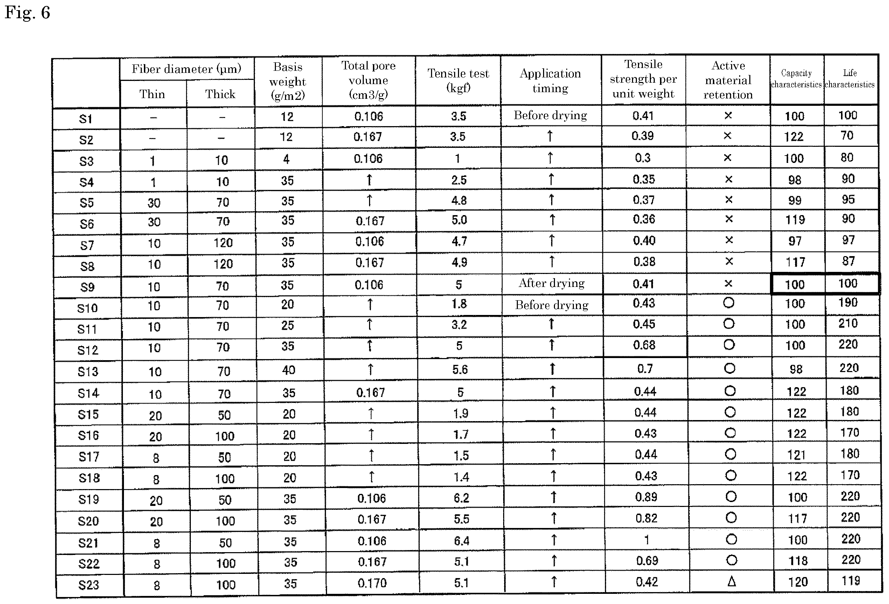

A plurality of samples (S1 to S23) of a lead-acid battery were prepared, and performance evaluation was performed on the samples. Fig. 6 is an explanatory view showing performance evaluation results.

A-3-1. Each sample:

As shown in Fig. 6, the samples differ from each other in at least one of a fiber type, a basis weight, a fiber diameter, a timing at which a glass mat or pasting paper is applied to the paste for the positive active material, and a total pore volume of the positive active material.

Samples S1 to S9 are comparative examples. In the samples S1 and S2, the pasting paper is disposed on the positive active material instead of the glass mat. The pasting paper is formed not of glass fibers but of natural organic fibers derived from wood. When charging and discharging is repeated after the pasting paper is immersed in the electrolyte solution 18 contained in the container 12, the pasting paper is dissolved in an initial use stage of the lead-acid battery. For this reason, when the lead-acid battery 100 is used, the pasting paper is not present on the positive active material, and does not function to prevent the positive active material from falling off. In the samples S3 and S4, while the fiber diameter of thinner glass fibers is 1 $\mu$m, the fiber diameter of thicker glass fibers is 10 $\mu$m, so that the specific condition regarding the fiber diameter is not satisfied. In the samples S5 and S6, while the fiber diameter of thinner glass fibers is 30 $\mu$m, the fiber diameter of thicker glass fibers is 70 $\mu$m, so that the specific condition regarding the fiber diameter is not satisfied. In the samples S7 and S8, while the fiber diameter of thinner glass fibers is 10 $\mu$m, the fiber diameter of thicker glass fibers is 120 $\mu$m, so that the specific condition regarding the fiber diameter is not satisfied. In the sample 9, the glass mat is applied to the paste for the positive active material after the paste for the positive active material is aged and dried. This means that the glass fibers of the glass mat hardly bite into the inside of the positive active material. The value of the fiber diameter of each sample is a value of a singular point in the distribution diagram described above.

Samples S10 to S23 are examples of the present invention. In the samples S10 to S23, while the fiber diameter of thinner glass fibers is 8 $\mu$m or more and 20 $\mu$m or less, the fiber diameter of thicker glass fibers is 50 $\mu$m or more and 100 pm or less, so that the specific condition regarding the fiber diameter is satisfied. In the samples S10 to S12 and S14 to S23, since the basis weight of the glass mat is 20 g/m$^2$ or more and 35 g/m$^2$ or less, the specific condition regarding the basis weight is satisfied. On the other hand, in the sample S13, since the basis weight of the glass mat is 40 g/m$^2$, the specific condition regarding the basis weight is not satisfied.

In the samples S1 to S22, the total pore volume of the positive active material is 0.106 cm$^3$/g or 0.167 cm$^3$/g, and the specific condition regarding the total pore volume is satisfied. On the other hand, in the sample 23, the total pore volume of the positive active material is 0.170 cm$^3$/g, and the specific condition regarding the total pore volume is not satisfied.

A-3-2. Evaluation items and evaluation methods:

Using each sample of the lead-acid battery, three items including an active material retention, life characteristics (idling stop life characteristics), and capacity characteristics (20-hour rate capacity characteristics) were evaluated.

The active material retention was evaluated as follows. That is, for each sample of the lead-acid battery, a tensile test was performed on a glass mat or pasting paper disposed on the positive active material in the positive electrode plate. In the tensile test, the positive electrode plate and the glass mat or pasting paper were pulled in a plane direction parallel to the positive electrode plate, and tensile strength obtained when the glass mat or the pasting paper was torn was measured. A value obtained by dividing the tensile strength by the weight of the positive electrode current collector was calculated. This value is the tensile strength of the glass mat or pasting paper per unit weight of the positive electrode current collector, and is a parameter capable of measuring the tensile strength due to a degree of biting of the glass mat while excluding an influence of the tensile strength on the positive electrode plate side varying depending on strength (thickness or the like) of the positive electrode plate, a density of the positive active material, and the like. Hereinafter, this parameter is used as a parameter for evaluating the active material retention for retaining the positive active material so as to prevent the positive active material from falling off from the positive electrode current collector using a glass mat or pasting paper. This means that the larger the value, the higher the active material retention. In this evaluation, when the tensile strength per unit weight of the positive electrode current collector is 4.12 N/g (0.42 kgf/g) or more, this case is evaluated as "Δ" as a good result, and when the tensile strength per unit weight of the positive electrode current collector is 4.22 g(0.43 kgf/g) or more, this case is evaluated as "○" as the best result. The tensile test in Fig. 6 shows the tensile strength of the glass mat or the pasting paper alone. That is, this is a value of the tensile strength obtained when only the glass mat or the pasting paper before being placed on the positive electrode plate is pulled and torn.

The life characteristics were evaluated as follows. That is, a life test was performed on each sample of the lead-acid battery by a method including the following steps a) to e), and the number of cycles (life cycle number) at the end of the test was obtained. Assuming that the life cycle number in the sample S9 was 100 (indicated by a thick line in Fig. 6), the life cycle number in each sample was represented by a relative value.

a) The sample is placed in a gas phase at 25 ±2°C throughout the entire test period. A wind speed near the sample shall be 2.0 m/s or less.
b) The sample is connected to a life test apparatus, and the following discharge ("discharge 1" and "discharge 2") and charge cycles are continuously repeated. The discharge and charge cycle is defined as one cycle of the life.

- Discharge 1: 59.0 ±0.2 seconds at a discharge current of 28 ±1 A
- Discharge 2: 1.0 ±0.2 seconds at a discharge current of 300 ± 1 A
- Charge: 60.0 ±0.3 seconds at a charge voltage of 14.00 ±0.03 V (current limit of 100.0 ±0.5 A)

During the test, a final discharge voltage of "discharge 2" is measured.
c) During the test, after the sample is left for 40 to 48 hours by each 3,600 times, the cycle is started again.
d) The test is terminated when it is confirmed that a voltage upon discharge has reached less than 7.2 V during the test.

e) Water is not added up to 30,000 times.
The capacity characteristics were evaluated as follows. That is, for each sample of the lead-acid battery, a 20-hour rate capacity was measured by a method including the following steps a) to d), and assuming that the 20-hour rate capacity in the sample S5 was 100, the 20-hour rate capacity in each sample was represented by a relative value.
a) The sample is charged at a current of 3.42 times a 20-hour rate current $I_{20}$ until a terminal voltage during charge measured every 15 minutes or an electrolyte density in terms of temperature shows a constant value three times in succession. An electrolyte surface is filled up to a maximum liquid surface.
The temperature conversion of the electrolyte density is based on the following equation:

$$D_{20} = D_T + 0.0007(T - 20)$$

where $D_{20}$: Density (g/cm$^3$) of electrolyte solution at 20°C,

$D_T$: Density (g/cm$^3$) of electrolyte solution at T°C
T: Temperature (°C) of electrolyte solution when density is measured

b) The sample is placed in a water tank at 25 ±2°C throughout the entire test period. The water surface shall be between 15 and 25 mm downward from an upper surface of the sample. When a plurality of samples are placed in the same water tank, a distance between the samples and a distance to the water tank wall shall be at least 25 mm.
c) After 1 to 5 hours from completion of charge according to a), it is confirmed that the electrolyte temperature is 25 ±2°C. Thereafter, the sample is discharged at a 20-hour rate current $I_{20}$ until the terminal voltage drops to 10.50 ±0.05 V, and a discharge duration time t is recorded.
d) An effective 20-hour rate capacity $C_{20, e}$ (Ah) of a storage battery is calculated by the following equation:

$$C_{20,e} = I_{20} \times t$$

where $I_{20}$: 20-hour rate current (A)
t: Discharge duration time (hour)

A-3-3. Evaluation results:

As shown in Fig. 6, in all the samples S10 to S23 satisfying the above-described specific condition regarding the fiber diameter, in the evaluation of the active material retention, the tensile strength per unit weight of the positive electrode current collector is 4.12 N/g(0.42 kgf/g) or more, and the samples were evaluated as "○"

as the best result or "△" as a good result. In the evaluation of the life characteristics, a good result was obtained such that the value was "119" or more. In addition, it can be seen that, even for a sample in which the tensile strength of the glass mat alone is relatively low, by satisfying the specific condition regarding the fiber diameter, the life characteristics are improved while suppressing the deterioration of the capacitance characteristics.

On the other hand, in the samples S1 and S2 in which the pasting paper was disposed on the positive active material, in the evaluation of the active material retention, the samples were evaluated as "×" as a poor result. As described above, this is because the pasting paper is dissolved in the electrolyte solution, the pasting paper does not function to prevent the positive active material from falling off during charge and discharge of the lead-acid battery 100.

In the samples S3 to S8 that did not satisfy the specific condition regarding the fiber diameter, in the evaluation of the active material retention, the samples were evaluated as "×" as a poor result. In the evaluation of the life characteristics, a not-good result was obtained such that the value was "100" or less. In the samples S3 and S4, the glass fibers are relatively thin, so that the strength of the glass fibers is relatively low. For this reason, in the samples S3 and S4, even if a part of the glass fiber is located inside the positive electrode material, when the volume of the positive electrode material changes due to charge and discharge of the lead-acid battery, for example, the glass fiber may be damaged or is likely to be removed from the positive electrode material. As a result, it is considered that a bonding strength between the glass mat and the positive electrode material is not sufficiently ensured, and falling off of the positive electrode material cannot be sufficiently suppressed. In the samples S5 and S6, even thinner glass fibers are relatively thick. For this reason, in the samples S5 and S6, a gap between the glass fibers is wide as a whole, and as a result, the positive electrode material located between the glass fibers is considered to be likely to fall off. In the samples S7 and S8, thicker glass fibers are excessively thick. For this reason, in the samples S7 and S8, a gap between the glass fibers is wide as a whole, and as a result, the positive electrode material located between the glass fibers is considered to be likely to fall off.

In the sample 9 in which the glass mat was applied to the paste for the positive active material after the paste for the positive active material was aged and dried, in the evaluation of the active material retention, the sample 9 was evaluated as "×" as a poor result. In the sample 9, it is considered that since the glass fibers of the glass mat hardly bite into the inside of the positive active material, the bonding strength between the glass mat and the positive electrode material was not sufficiently ensured, and falling off of the positive electrode material cannot be sufficiently suppressed.

Among the samples S10 to S13, S19, and S21 in which the total pore volume per unit mass of the positive electrode material is 0.106 $cm^3$/g, in the sample S13 in which the basis weight of the glass mat is more than 35 $g/m^2$, although a good result was maintained in the evaluation of the capacity characteristics such that the value was "98", the evaluation was slightly lower than that for the samples (S10 to S12, S19, and S21) of the other examples. This is considered to be because in the sample 13, the basis weight is relatively large, and the movement of ions is slightly hindered by the glass mat. On the other hand, in the samples S10 to S12, S19, and S21 in which the basis weight of the glass mat was 35 $g/m^2$ or less, in the evaluation of the capacity characteristics, a good result was maintained such that the value was "100". Since the basis weight of the glass mat is 35 $g/m^2$ or less, it is considered that as compared with the configuration in which the basis weight of the glass mat is more than 35 $g/m^2$, it is possible to more effectively suppress hindering of the movement of ions by the glass mat.

In the samples S14 to S18, S20, and S22, since the total pore volume per unit mass of the positive electrode material was as large as 0.167 $cm^3$/g, in the evaluation of the capacity characteristics, the best result was obtained such that the value was "115" or more. On the other hand, despite the fact that the positive electrode material had a low density and was likely to fall off due to a large total pore volume per unit mass of the positive electrode material, in the evaluation of the life characteristics, a good result was obtained such that the value was "170" or more. This is presumably because in the samples S14 to S18, S20, and S22, the life characteristics are improved by the holding force of the glass mat because the specific condition regarding the fiber diameter is satisfied. On the other hand, it is considered that in the sample S23 in which the total pore volume per unit mass of the positive electrode material is 0.170 $cm^3$/g, the total pore volume is too large, and therefore, even with the holding force of the glass mat, the life characteristics are not improved.

B. Modifications:

The configuration of the lead-acid battery 100 in the above embodiment is merely an example, and can be variously modified. For example, although the glass mat 300 is a nonwoven fabric in the above embodiment, the glass mat 300 may be a woven fabric. The glass mat 300 may contain, in addition to the first glass fibers 217 and the second glass fibers 227, glass fibers that do not satisfy the specific condition regarding the fiber diameter. Further, the glass mat 300 may or may not contain an additive other than a binder.

Furthermore, in the above embodiment, the glass mat 300 may not satisfy the specific condition regarding the basis weight. In the above embodiment, the positive active material 216 may not satisfy the specific condition regarding the total pore volume. When viewed in the direction (X-axis direction) orthogonal to the positive electrode plate 210, at least a portion of the peripheral edge portion of the glass mat 300 may be located outside the peripheral edge portion of the positive electrode current collector 212.

In the above embodiment, the tensile strength per unit weight of the positive electrode current collector may be less 4.12 N/g(0.42 kgf/ g). The tensile strength per unit weight of the positive electrode current collector is preferably 9.81 N/g(1.0 kgf/g) or less. The specific region R may be present in at least one cross section of the positive active material 216 and the glass mat 300.

In the lead-acid battery 100 in the above embodiment, the negative active material 226 constituting the negative electrode plate 220 may satisfy the same condition as the above-described specific condition regarding the positive active material.

The method of producing the lead-acid battery 100 in the above embodiment is merely an example, and can be variously modified.

DESCRIPTION OF REFERENCE SIGNS

| | |
|---|---|
| 10: | Housing |
| 12: | Container |
| 14: | Lid |
| 16: | Cell chamber |
| 18: | Electrolyte solution |
| 20: | Electrode plate group |
| 28: | Discharge current |
| 30: | Positive electrode-side terminal portion |
| 32: | Positive electrode-side bushing |
| 34: | Positive electrode pole |
| 40: | Negative electrode-side terminal portion |
| 42: | Negative electrode-side bushing |
| 44: | Negative electrode pole |
| 52: | Positive electrode-side strap |
| 54: | Negative electrode-side strap |
| 56: | Connecting member |
| 58: | Partition |
| 100: | Lead-acid battery |
| 210: | Positive electrode plate |
| 212: | Positive electrode current collector |
| 214: | Positive electrode lug portion |
| 216: | Positive active material |
| 217: | First glass fiber |
| 220: | Negative electrode plate |
| 222: | Negative electrode current collector |
| 224: | Negative electrode lug portion |
| 226: | Negative active material |
| 227: | Second glass fiber |
| 230: | Separator |
| 300: | Glass mat |
| 302: | Columnar protrusion |
| R: | Specific region |

**Claims**

1. A lead-acid battery comprising:

   a positive electrode plate comprising a current collector and a positive electrode material supported by the current collector;
   a negative electrode plate;
   a separator disposed between the positive electrode plate and the negative electrode plate; and
   a glass mat containing a glass fiber and disposed on the positive electrode material in the positive electrode plate,
   wherein the glass fiber contained in the glass mat comprises a first glass fiber having a diameter of 8 pm or more and 20 $\mu$m or less and a second glass fiber having a diameter of 50 pm or more and 100 pm or less, and
   wherein a specific region where the positive electrode material, the first glass fiber, and the second glass fiber are mixed is present in at least one cross section substantially orthogonal to the positive electrode plate in the positive electrode material and the glass mat.

2. The lead-acid battery according to claim 1, wherein a basis weight of the glass mat is 20 g/m$^2$ or more and 35 g/m$^2$ or less.

3. The lead-acid battery according to claim 1 or 2, wherein a total pore volume per unit mass of the positive electrode material is 0.167 cm$^3$/g or less.

4. The lead-acid battery according to any one of claims 1 to 3, wherein both edge portions of the glass mat are located inside both edge portions of the current collector in at least one direction orthogonal to a direction of opposing the positive electrode plate to the negative electrode plate.

**Patentansprüche**

1. Bleiakkumulator, umfassend:

   eine positive Elektrodenplatte umfassend einen Stromkollektor und ein positives Elektrodenmaterial, das von dem Stromkollektor getragen wird;
   eine negative Elektrodenplatte;
   einen Separator, der zwischen der positiven Elektrodenplatte und der negativen Elektrodenplatte angeordnet ist; und
   eine Glasmatte, die eine Glasfaser enthält und auf dem positiven Elektrodenmaterial in der positiven Elektrodenplatte angeordnet ist,
   wobei die in der Glasmatte enthaltene Glasfaser eine erste Glasfaser mit einem Durchmesser

von 8 μm oder mehr und 20 μm oder weniger und eine zweite Glasfaser mit einem Durchmesser von 50 μm oder mehr und 100 μm oder weniger umfasst, und

wobei ein spezifischer Bereich, in dem das positive Elektrodenmaterial, die erste Glasfaser und die zweite Glasfaser gemischt sind, in mindestens einem Querschnitt im Wesentlichen orthogonal zu der positiven Elektrodenplatte in dem positiven Elektrodenmaterial und der Glasmatte vorhanden ist.

2. Bleiakkumulator nach Anspruch 1, wobei ein Flächengewicht der Glasmatte 20 g/m$^2$ oder mehr und 35 g/m$^2$ oder weniger beträgt.

3. Bleiakkumulator nach Anspruch 1 oder 2, wobei ein Gesamtporenvolumen pro Masseneinheit des positiven Elektrodenmaterials 0,167 cm$^3$/g oder weniger beträgt.

4. Bleiakkumulator nach einem der Ansprüche 1 bis 3, wobei beide Randabschnitte der Glasmatte innerhalb beider Randabschnitte des Stromkollektors in mindestens einer Richtung orthogonal zu einer Richtung angeordnet sind, in der die positive Elektrodenplatte der negativen Elektrodenplatte gegenüberliegt.

**Revendications**

1. Batterie au plomb acide comprenant :

une plaque d'électrode positive comprenant un collecteur de courant et un matériau d'électrode positive supporté par le collecteur de courant ;
une plaque d'électrode négative ;
un séparateur disposé entre la plaque d'électrode positive et la plaque d'électrode négative ; et
un tapis de verre contenant une fibre de verre et disposé sur le matériau d'électrode positive dans la plaque d'électrode positive,
dans laquelle la fibre de verre contenue dans le tapis de verre comprend une première fibre de verre ayant un diamètre de 8 μm ou plus et 20 μm ou moins et une seconde fibre de verre ayant un diamètre de 50 μm ou plus et 100 μm ou moins,
et
dans laquelle une région spécifique où le matériau d'électrode positive, la première fibre de verre et la seconde fibre de verre sont mélangés est présente dans au moins une section transversale essentiellement orthogonale à la plaque d'électrode positive dans le matériau d'électrode positive et le tapis de verre.

2. Batterie au plomb acide selon la revendication 1, dans laquelle un poids de base du tapis de verre est de 20 g/m$^2$ ou plus et de 35 g/m$^2$ ou moins.

3. Batterie au plomb acide selon la revendication 1 ou 2, dans laquelle un volume de pore total par masse unitaire du matériau d'électrode positive est de 0,167 cm$^3$/g ou moins.

4. Batterie au plomb acide selon l'une quelconque des revendications 1 à 3, dans laquelle les deux parties de bord du tapis de verre sont situées à l'intérieur des deux parties de bord du collecteur de courant dans au moins une direction orthogonale à une direction opposant la plaque d'électrode positive à la plaque d'électrode négative.

Fig. 1

Fig. 2

Fig. 3

Fig. 4

Fig. 5

## Fig. 6

| | Fiber diameter (µm) | | Basis weight (g/m2) | Total pore volume (cm3/g) | Tensile test (kgf) | Application timing | Tensile strength per unit weight | Active material retention | Capacity characteristics | Life characteristics |
|---|---|---|---|---|---|---|---|---|---|---|
| | Thin | Thick | | | | | | | | |
| S1 | – | – | 12 | 0.106 | 3.5 | Before drying | 0.41 | × | 100 | 100 |
| S2 | – | – | 12 | 0.167 | 3.5 | ↑ | 0.39 | × | 122 | 70 |
| S3 | 1 | 10 | 4 | 0.106 | 1 | ↑ | 0.3 | × | 100 | 80 |
| S4 | 1 | 10 | 35 | ↑ | 2.5 | ↑ | 0.35 | × | 98 | 90 |
| S5 | 30 | 70 | 35 | ↑ | 4.8 | ↑ | 0.37 | × | 99 | 95 |
| S6 | 30 | 70 | 35 | 0.167 | 5.0 | ↑ | 0.36 | × | 119 | 90 |
| S7 | 10 | 120 | 35 | 0.106 | 4.7 | ↑ | 0.40 | × | 97 | 97 |
| S8 | 10 | 120 | 35 | 0.167 | 4.9 | ↑ | 0.38 | × | 117 | 87 |
| S9 | 10 | 70 | 35 | 0.106 | 5 | After drying | 0.41 | × | 100 | 100 |
| S10 | 10 | 70 | 20 | ↑ | 1.8 | Before drying | 0.43 | ○ | 100 | 190 |
| S11 | 10 | 70 | 25 | ↑ | 3.2 | ↑ | 0.45 | ○ | 100 | 210 |
| S12 | 10 | 70 | 35 | ↑ | 5 | ↑ | 0.68 | ○ | 100 | 220 |
| S13 | 10 | 70 | 40 | ↑ | 5.6 | ↑ | 0.7 | ○ | 98 | 220 |
| S14 | 10 | 70 | 35 | 0.167 | 5 | ↑ | 0.44 | ○ | 122 | 180 |
| S15 | 20 | 50 | 20 | ↑ | 1.9 | ↑ | 0.44 | ○ | 122 | 180 |
| S16 | 20 | 100 | 20 | ↑ | 1.7 | ↑ | 0.43 | ○ | 122 | 170 |
| S17 | 8 | 50 | 20 | ↑ | 1.5 | ↑ | 0.44 | ○ | 121 | 180 |
| S18 | 8 | 100 | 20 | ↑ | 1.4 | ↑ | 0.43 | ○ | 122 | 170 |
| S19 | 20 | 50 | 35 | 0.106 | 6.2 | ↑ | 0.89 | ○ | 100 | 220 |
| S20 | 20 | 100 | 35 | 0.167 | 5.5 | ↑ | 0.82 | ○ | 117 | 220 |
| S21 | 8 | 50 | 35 | 0.106 | 6.4 | ↑ | 1 | ○ | 100 | 220 |
| S22 | 8 | 100 | 35 | 0.167 | 5.1 | ↑ | 0.69 | ○ | 118 | 220 |
| S23 | 8 | 100 | 35 | 0.170 | 5.1 | ↑ | 0.42 | Δ | 120 | 119 |

EP 3 651 258 B1

**EP 3 651 258 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015099189 A1
- JP 2011249337 A